# EUROPEAN PATENT APPLICATION

(11) **EP 4 148 280 A1**
(43) Date of publication of application: **15.03.2023**
(21) Application number: 22194843.3
(22) Date of filing: 09.09.2022
(51) Int. Cl.: F04D 29/02, F04D 29/42

(54) **TURBOMACHINERY HOUSING WITH VARIABLE LATTICE DENSITIES**

(30) Priority: 10.09.2021 US 202117472165
(71) Applicant: Hamilton Sundstrand Corporation, Charlotte, NC 28217-4578 (US)
(72) Inventor: MERRITT, Brent J., Southwick, 01077 (US); COLSON, Darryl A., West Suffield, 06093 (US)
(74) Representative: Dehns

(57) **Abstract**

A housing (20) for a rotary machine includes a support sleeve (118) extending along a central axis of the rotary machine, a volute portion (124) defining a duct (34) in the housing, and a variable lattice structure (142) in an interior of the housing. The variable lattice structure includes a first region (150) of the housing having a first lattice structure and a second region (152) of the housing having a second lattice structure. The second lattice structure of the second region is denser than the first lattice structure of the first region. The second region is a deflection region, a stress region, or an energy containment region of the housing.

## Description

### BACKGROUND

The present disclosure relates to aircraft environmental control systems, and in particular, to a turbomachinery housing for a cabin air compressor.

Cabin air compressors are used in environmental control systems in aircraft to condition air for delivery to an aircraft cabin. Conditioned air is air at a temperature, pressure, and humidity desirable for aircraft passenger comfort and safety. At or near ground level, the ambient air temperature and humidity is often sufficiently high that the air must be cooled as part of the conditioning process before being delivered to the aircraft cabin. At flight altitude, ambient air is often far cooler than desired, but at such a low pressure that it must be compressed to an acceptable pressure as part of the conditioning process. Compressing ambient air at flight altitude heats the resulting pressurized air sufficiently that it must be cooled, even if the ambient air temperature is very low. Thus, under most conditions, heat must be removed from the air by the air cycle machine before the air is delivered to the aircraft cabin.

A cabin air compressor can be used to compress air for use in an environmental control system. The cabin air compressor includes a motor to drive a compressor section that in turn compresses air flowing through the cabin air compressor. This compressor section includes a rotor, which transfers rotational energy from the motor to a fluid. The rotor is surrounded by a rotor shroud which improves rotor efficiency and protects the surrounding components in case of rotor failure. A housing surrounds the components of the cabin air compressor.

### SUMMARY

A housing for a rotary machine includes a support sleeve extending along a central axis of the rotary machine, a volute portion defining a duct in the housing, and a variable lattice structure in an interior of the housing. The variable lattice structure includes a first region of the housing having a first lattice structure and a second region of the housing having a second lattice structure. The second lattice structure of the second region is denser than the first lattice structure of the first region. The second region is a deflection region, a stress region, or an energy containment region of the housing.

A rotary machine includes a tie rod extending through the rotary machine, a rotor mounted on the tie rod, and a first housing partially surrounding the tie rod and the rotor. The first housing includes a support sleeve extending along a central axis of the rotary machine, a volute portion defining a duct in the first housing, and a variable lattice structure in an interior of the first housing. The variable lattice structure includes a first region of the first housing having a first lattice structure and a second region of the first housing having a second lattice structure. The second lattice structure of the second region is denser than the first lattice structure of the first region. The second region is a deflection region, a stress region, or an energy containment region of the first housing.

### BRIEF DESCRIPTION OF THE DRAWINGS

Certain exemplary embodiments will now be described in greater detail by way of example only and with reference to the accompanying drawings, in which:
FIG. 1 is cross-sectional view of a cabin air compressor.
FIG. 2A is a perspective view of a first side of a compressor outlet housing of the cabin air compressor.
FIG. 2B is a perspective view of a second side of the compressor outlet housing of the cabin air compressor.
FIG. 3 is a cross-sectional view of the compressor outlet housing taken along section line 3-3 of FIG. 2A.
FIG. 4 is a cross-sectional view of the compressor outlet housing in the cabin air compressor.
FIG. 5 is a flowchart showing a method of manufacturing the compressor outlet housing.

### DETAILED DESCRIPTION

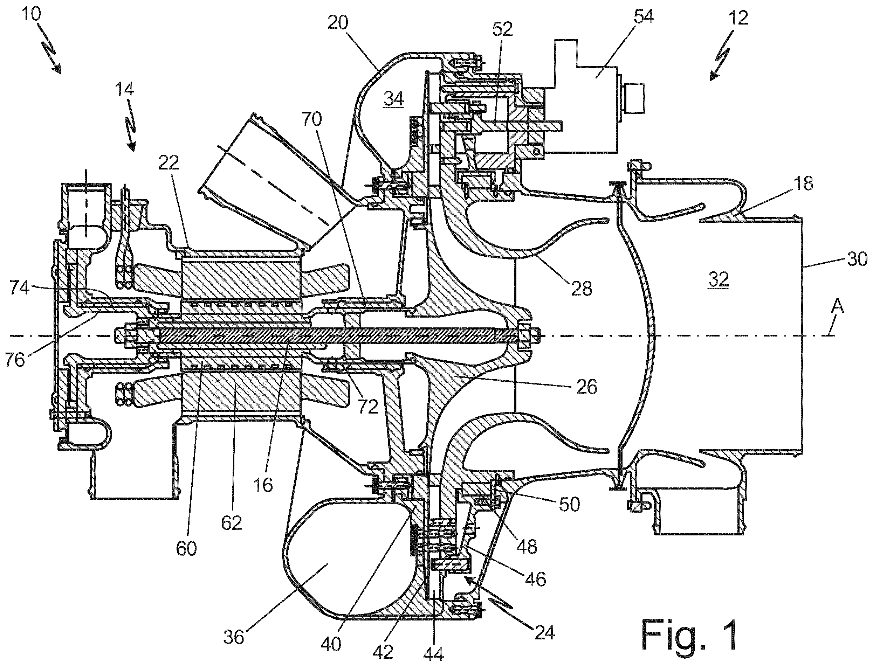

FIG. 1 is a cross-sectional view of cabin air compressor 10. Cabin air compressor 10 includes compressor section 12, motor section 14, tie rod 16, compressor inlet housing 18, compressor outlet housing 20, motor housing 22, variable diffuser 24, rotor 26, and rotor shroud 28. Compressor inlet housing 18 includes inlet 30 and inlet duct 32. Compressor outlet housing 20 includes outlet duct 34 and outlet 36. Variable diffuser 16 includes backing plate 40, inboard plate 42, diffuser vanes 44, drive ring 46, drive ring bearing 48, backup ring 50, pinion 52, and variable diffuser actuator 54. Motor section 14 includes motor rotor 60 and motor stator 62. Cabin air compressor 10 further includes first journal bearing 70, first rotating shaft 72, second journal bearing 74, and second rotating shaft 76. FIG. 1 also shows axis A.

Cabin air compressor 10 includes compressor section 12 and motor section 14 mounted on tie rod 16. Tie rod 16 is configured to rotate about axis A. Compressor section 12 includes compressor inlet housing 18 and compressor outlet housing 20 that are connected to one another. Motor section 14 includes motor housing 22, which is connected to compressor outlet housing 20. Variable diffuser 24 is positioned between compressor inlet housing 18 and compressor outlet housing 20. Rotor 26 is positioned between compressor inlet housing 18 and compressor outlet housing 20. Rotor 26 is mounted on tie rod 16, which rotatably connects rotor 26 and motor section 14. Rotor shroud 28 is positioned radially outward from and partially surrounds compressor rotor 26.

Compressor inlet housing 18 includes inlet 30 and inlet duct 32. Inlet 30 is positioned at a first end of compressor inlet housing 18. Inlet duct 32 extends from inlet 30 through compressor inlet housing 18 to rotor 26. Compressor outlet housing 20 includes outlet duct 34 and outlet 36. Outlet duct 34 extends through compressor outlet housing 20 from rotor 26 to outlet 36.

Variable diffuser 16 includes backing plate 40, inboard plate 42, diffuser vanes 44, drive ring 46, drive ring bearing 48, pinion 50, backup ring 52, and variable diffuser actuator 54. Backing plate 40 abuts compressor outlet housing 20 on a first side and inboard plate 42 on a second side. Inboard plate 42 abuts backing plate 40 on a first side and diffuser vanes 44 on a second side. Diffuser vanes 44 abut inboard plate 42 on a first side and rotor shroud 28 on a second side. Diffuser vanes 44 are configured to direct the compressed air from rotor 26 into outlet duct 34. Drive ring 46 is positioned radially outward from rotor shroud 28, and drive ring bearing 48 is positioned between driver ring 46 and rotor shroud 28. Drive ring 46 abuts rotor shroud 28 on a first side and backup ring 50 on a second side. Backup ring 50 is positioned radially outward of rotor shroud 28. Pinion 52 is connected to variable diffuser actuator 54 and is coupled to drive ring 46. Pinion 52 permits control of variable diffuser 16. Drive ring 46 is coupled to diffuser vanes 44 with pins, and as drive ring 46 is rotated it will drag diffuser vanes 44 and cause them to rotate.

Motor section 14 includes motor housing 22, motor rotor 60, and motor stator 62. Motor housing 22 surrounds motor rotor 60 and motor stator 62. Motor rotor 60 is disposed within motor stator 62 and is configured to rotate about axis A. Motor rotor 60 is mounted to tie rod 16 to drive rotation of tie rod 16.

Motor rotor 60 of motor section 14 drives rotation of shafts of cabin air compressor 10, which in turn rotate rotor 26. The rotation of rotor 26 draws air into inlet 30 of compressor inlet housing 18. The air flows through inlet duct 32 to rotor 26 and will be compressed by rotor 26. The compressed air is then routed through variable diffuser 16 and into outlet duct 34 of compressor outlet housing 20. The air then exits cabin air compressor 10 through outlet 36 of compressor outlet housing 20 and can be routed to another component of an environmental control system, such as an air cycle machine.

Cabin air compressor 10 further includes first journal bearing 70, first rotating shaft 72, second journal bearing 74, and second rotating shaft 76. First journal bearing 70 is positioned in compressor section 12 and is supported by compressor outlet housing 20. First rotating shaft 72 extends between and rotates with rotor 26 and motor rotor 60. Motor rotor 60 drives rotation of rotor 26 with first rotating shaft 72. A radially outer surface of first rotating shaft 72 abuts a radially inner surface of first journal bearing 70. Second journal bearing 74 is positioned in motor section 14 and is supported by motor housing 22. Second rotating shaft 76 extends from and rotates with motor rotor 60. A radially outer surface of second rotating shaft 76 abuts a radially inner surface of second journal bearing 74.

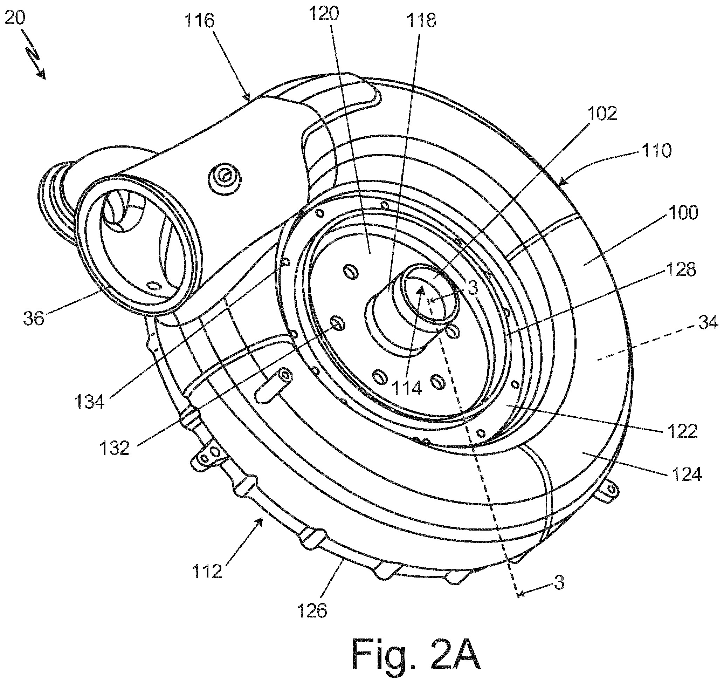

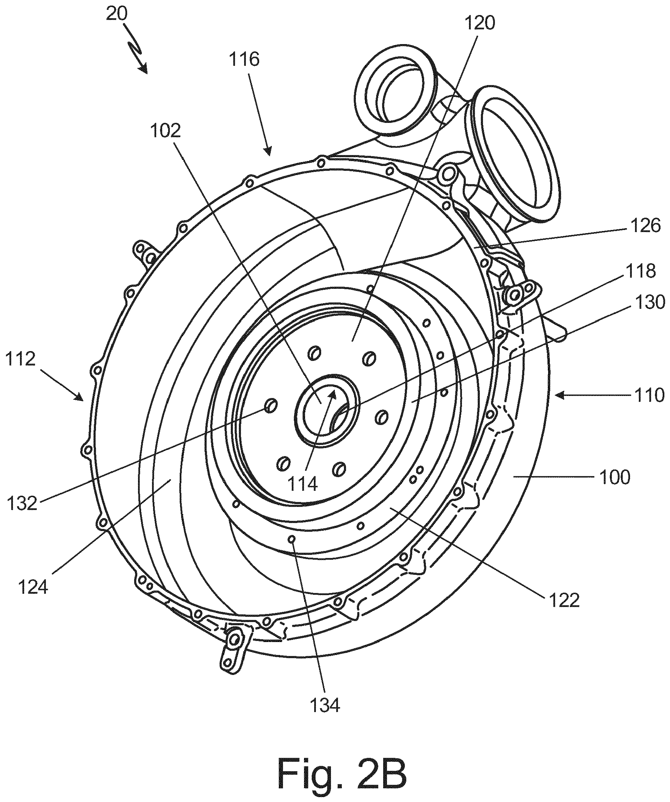

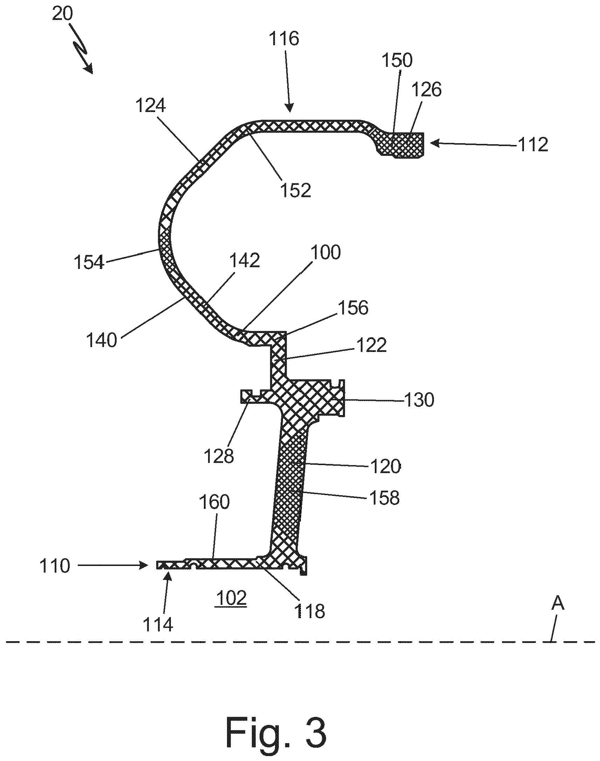

FIG. 2A is a perspective view of a first side of compressor outlet housing 20 of cabin air compressor 10. FIG. 2B is a perspective view of a second side of compressor outlet housing 20 of cabin air compressor 10. FIG. 3 is a cross-sectional view of compressor outlet housing 20 taken along section line 3-3 of FIG. 2A. FIGS. 2A-3 will be discussed together. Compressor outlet housing 20 includes outlet duct 34, outlet 36 (shown in FIGS. 2A-2B), body 100, and bore 102. Body 100 includes first side 110, second side 112, radially inner end 114, radially outer end 116, support sleeve 118, first disk portion 120, second disk portion 122, volute portion 124, first flange 126, second flange 128 (shown in FIGS. 2A and 3), third flange 130 (shown in FIGS. 2B-3), first plurality of holes 132 (shown in FIGS. 2A-2B), and second plurality of holes 134 (shown in FIGS. 2A-2B). As shown in FIG. 3, body 100 further includes exterior surface 140 and lattice structure 142, which includes first region 150, second region 152, third region 154, fourth region 156, fifth region 158, and sixth region 160.

Compressor outlet housing 20 includes outlet duct 34 extending through compressor outlet housing 20 to outlet 36. Compressor outlet housing 20 includes body 100 with bore 102 extending through a center of body 100. Body 100 has first side 110 and second side 112 opposite of first side 110. Body 100 also has radially inner end 114 and radially outer end 116 opposite of radially inner end 114. Radially inner end 114 of body 100 defines bore 102 extending through body 100 of rotor shroud 28.

Body 100 includes support sleeve 118 that extends axially along radially inner end 114 of body 100. Bore 102 is defined by an inner surface of support sleeve 118. First disk portion 120 is connected to a second side of support sleeve 118 and extends radially outward from support sleeve 118. Second disk portion 122 is connected to a first side of first disk portion 120 and extends radially outward from first disk portion 120. Volute portion 124 is a curved portion of body 100 that extends radially outward from second disk portion 122. Volute portion 124 curves towards first side 110 of body 100 and extends towards second side 112 of body 100 along radially outer end 116 of body 100. Volute portion 124 defines outlet duct 34 extending through compressor outlet housing 20.

First flange 126 extends axially outward from a second side of volute portion 124 at radially outer end 116 of body 100. Second flange 128 extends axially outward from a first side of first disk portion 120 at a radially outer end of first disk portion 120. Second flange 128 includes a groove that is configured to receive an o-ring to seal against other components of cabin air compressor 10. Third flange 130 extends axially outward from a second side of first disk portion 120 at a radially outer end of first disk portion 120. Third flange 130 includes a groove that is configured to receive an o-ring to seal against other components of cabin air compressor 10. First plurality of holes 132 are positioned around first disk portion 120. Second plurality of holes 134 are positioned around second disk portion 122. Second plurality of holes 134 are configured to receive bolts to mount compressor outlet housing 20 to other components of cabin air compressor 10.

Body 100 further includes exterior surface 140 that surrounds lattice structure 142 in an interior of body 100. Exterior surface 140 is a solid, continuous surface. Lattice structure 142 is a varying lattice structure. Lattice structure 142 has regions with varying densities. As shown in FIG. 3, lattice structure 142 has first region 150, second region 152, third region 154, fourth region 156, fifth region 158, and sixth region 160. Lattice structure 142 may vary gradually or abruptly between regions. Lattice structure 142 includes members arranged in a 3D crisscrossing pattern with voids between the members. As shown in FIG. 3, lattice structure 142 varies in density by having a varying distribution of the members and voids of lattice structure 142. In alternate embodiments, lattice structure 142 can vary in density by varying the thickness of the members, by having varying geometrical configurations, and/or by varying fillet radii on joints between the members.

First region 150 is a region of lattice structure 142 in first flange 126 of compressor outlet housing 20. Second region 152 is a region of lattice structure 142 in a radially outer region of volute portion 124. Third region 154 is a region of lattice structure 142 in a region of volute portion 124 that curves outwards towards first side 110 of body 100 of compressor outlet housing 20. Fourth region 156 is a region of lattice structure 142 extending through a radially inner region of volute portion 124, second disk portion 122, second flange 128, third flange 130, and a radially outer end of first disk portion 120. Fifth region 158 is a region of lattice structure 142 extending through a center of first disk portion 120. Sixth region 160 is a region of lattice structure 142 extending through a radially inner end of first disk portion 120 and support sleeve 118.

In the embodiment shown in FIG. 3, first region 150, third region 154, and fifth region 158 have a greater density than second region 152, fourth region 156, and sixth region 160. Compressor outlet housing 20 is additively manufactured, allowing lattice structure 142 to be manufactured with different densities in different areas of compressor outlet housing 20. Any suitable additive manufacturing process (also known as a 3D printing process) can be used to manufacture compressor outlet housing 20, including, for example, direct metal laser sintering, electron beam freeform fabrication, electron-beam melting, selective laser melting, or selective laser sintering. Compressor outlet housing 20 can be made out of any material that can be used in an additive manufacturing process, including any of stainless steel, corrosion-resistant steel, nickel-chromium alloy, aluminum, synthetic fiber, fiberglass, composites, and combinations thereof.

Traditional housings for rotary machines have solid cross-sections and are manufactured by casting, weldment, and/or subtractive manufacturing processes, such as hogout. Additively manufacturing compressor outlet housing 20 allows lattice structure 142 to be used in compressor outlet housing 20. Using lattice structure 142 in compressor outlet housing 20 allows compressor outlet housing 20 to have a reduced weight compared to traditional housings, as there are voids between the lattice structure. At the same time, compressor outlet housing 20 will have an equivalent strength as traditional housings due to the increased strength of lattice structure 142.

Further, the density of lattice structure 142 is varied to optimize mechanical properties of compressor outlet housing 20 locally and generally. Mechanical properties of compressor outlet housing 20, such as stress, strain, stiffness, and energy absorption, can be optimized to improve the performance of compressor outlet housing 20 by reducing stress in high stress regions of compressor outlet housing 20, reducing strain and increasing stiffness in deflection regions of compressor outlet housing 20, and increasing energy absorption capacity at energy containment regions of compressor outlet housing 20. Reducing stress and strain in local regions of compressor outlet housing 20 can also reduce stress and strain in compressor outlet housing 20 generally. Reducing the stresses in high stress regions can reduce the failure rate of components in cabin air compressor 10. Reduced failure rates result in reduced down time, reduced repairs, and reduced costs. Reducing the strain and increasing the stiffness in deflection regions can reduce the tolerances between rotor 26 and surrounding components, can reduce the bearing loads in cabin air compressor 10, and can increase the bearing alignment in cabin air compressor 10. Reducing the tolerances between rotor 26 and surrounding components can increase the compression efficiency of cabin air compressor 10. Reducing the bearing loads in cabin air compressor 10 can increase reliability of cabin air compressor 10. Increased energy absorption capacity can improve the safe operation of cabin air compressor 10. Should rotor 26 fail, rotor shroud 28, compressor outlet housing 20, and other components in cabin air compressor 10 can contain this energy to protect other components of cabin air compressor 10.

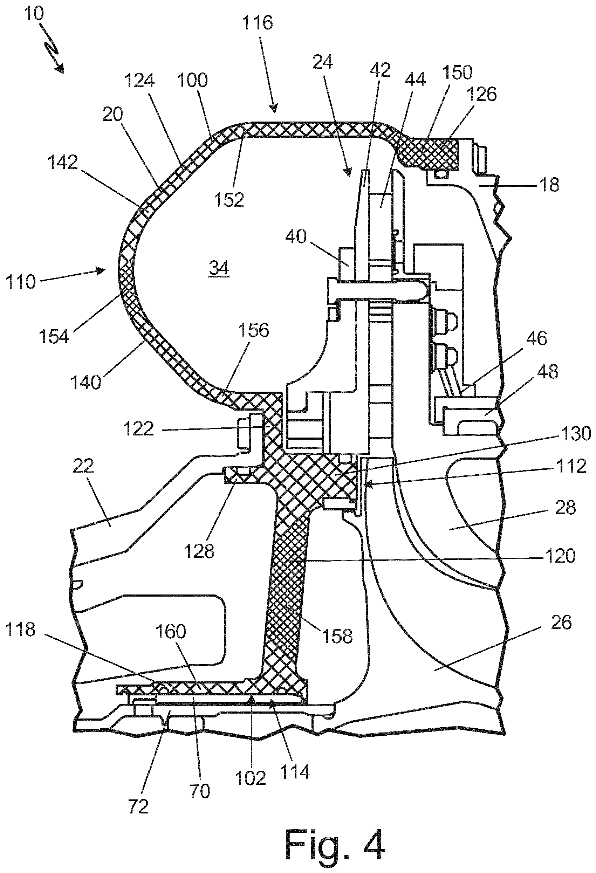

FIG. 4 is a cross-sectional view of compressor outlet housing 20 in cabin air compressor 10. FIG. 4 shows compressor inlet housing 18, compressor outlet housing 20, motor housing 22, variable diffuser 24, rotor 26, and rotor shroud 28. Compressor outlet housing 20 includes outlet duct 34. Variable diffuser 16 includes backing plate 40, inboard plate 42, diffuser vanes 44, drive ring 46, and drive ring bearing 48. Cabin air compressor 10 further includes first journal bearing 70 and first rotating shaft 72. Compressor outlet housing 20 includes body 100, and bore 102. Body 100 includes first side 110, second side 112, radially inner end 114, radially outer end 116, support sleeve 118, first disk portion 120, second disk portion 122, volute portion 124, first flange 126, second flange 128, and third flange 130. As shown in FIG. 4, body 100 further includes exterior surface 140 and lattice structure 142, which includes first region 150, second region 152, third region 154, fourth region 156, fifth region 158, and sixth region 160.

Cabin air compressor 10 has the structure and design as described above in reference to FIG. 1. Compressor outlet housing 20 has the structure and design as described above in reference to FIGS. 2A-3. Compressor outlet housing 20 houses components of cabin air compressor 10. First flange 126 of compressor outlet housing 20 abuts and is bolted to compressor inlet housing 18. Second flange 128 of compressor outlet housing 20 abuts and seal against motor housing 22. Second flange 128 also has a groove to receive an o-ring that is positioned against and sealed against motor housing 22. Motor housing 22 is bolted to compressor outlet housing 20 through second plurality of holes 134 (not shown in FIG. 4) on second disk portion 122. Third flange 130 of compressor outlet housing 20 abuts and seals against inboard plate 42 on a radially outer end of third flange 130. Third flange 130 has a groove on the radially outer end to receive an o-ring that is positioned against and sealed against inboard plate 42. Third flange 130 also abuts and seals against rotor 26 on a radially inner end of third flange 130. A seal is positioned between the radially inner end of third flange 130 and rotor 26. First disk portion 120 of compressor outlet housing 20 is positioned adjacent to a first side of rotor 26. Support sleeve 118 abuts first journal bearing 70.

Compressor outlet housing 20 has first region 150 of lattice structure 142 in first flange 126. First region 150 is a deflection region of compressor outlet housing 20, which is a region of compressor outlet housing 20 that is subject to deflection. As cabin air compressor 10 operates, first region 150 of first flange 126 is subject to deflection. First region 150 of lattice structure 142 is an area of increased density that aids in deflection management of compressor outlet housing 20 to reduce and prevent deflection of compressor outlet housing 20. By reducing and preventing deflection of compressor outlet housing 20, the efficiency of cabin air compressor 10 can be increased.

There is a gap between a hub of rotor 26 and third flange 132 of compressor outlet housing 20 and between rotor 26 and other components of cabin air compressor 10 to prevent contact between rotor 26 and compressor outlet housing 20 and other components of cabin air compressor 10. Contact between rotor 26 and compressor outlet housing 20 and other components of cabin air compressor 10 may damage the components and cause failure of cabin air compressor 10. The gaps between rotor 26 and compressor outlet housing 20 and other components of cabin air compressor 10 have to account for deflections that rotor 26 and compressor outlet housing 20 can be subjected to during operation of rotor 26. Thus, the more deformation that rotor 26 and compressor outlet housing 20 are subjected to during operation of rotor 26, the larger the gaps need to be to ensure component safety. However, air can leak from cabin air compressor 10 through the gaps, which leads to inefficiencies in cabin air compressor 10. Thus, it is desirable to minimize the gaps between rotor 26 and compressor outlet housing 20 and other components of cabin air compressor 10. Identifying deflection regions of compressor outlet housing 20 and increasing the density of lattice structure 142 in the deflection regions (for example, first region 150) reduces and prevents the deflections and strain that compressor outlet housing 20 is subjected to during operation of rotor 26 by increasing the stiffness in these areas. This reduced deflection and strain and increased stiffness means that the parts deform less when in operation. If compressor outlet housing 20 undergoes less deflection, the gaps between rotor 26 and compressor outlet housing 20 and other components of cabin air compressor 10 can be reduced. Reducing the gap increases the efficiency of cabin air compressor 10.

Compressor outlet housing 20 has third region 154 of lattice region 142 in a region of volute portion 124 that curves outwards towards a first side of volute portion 124. Third region 154 is a stress region of compressor outlet housing 20, which is a region of compressor outlet housing 20 that is subject to high stress during operation of cabin air compressor 10. The high stress in stress regions of compressor outlet housing 20, such as third region 154, is a higher stress than stresses present in other regions of compressor outlet housing 20. Third region 154 of lattice structure 142 is an area of increased density that aids in stress reduction during operation of cabin air compressor 10 to reduce the stress in third region 154 of compressor outlet housing 20. Stress reduction at critical points of compressor outlet housing 20 leads to increased longevity of compressor outlet housing 20.

Reducing stress in stress regions of compressor outlet housing 20 will improve the longevity of compressor outlet housing 20. Reducing the stresses at stress regions can reduce the failure rate of compressor outlet housing 20, as well as the failure rate of cabin air compressor 10 overall. During operation, these failures can damage components surrounding compressor outlet housing 20, as these components are required to contain the energy of the failure for safety of the aircraft and its passengers. Reduced failure rates result in reduced down time, reduced repairs, and reduced costs.

Compressor outlet housing 20 has fifth region 158 of lattice structure 142 in a center of first disk portion 120. Fifth region 158 is an energy containment region of compressor outlet housing 20, which is a region of compressor outlet housing 20 that is designed to absorb energy. Fifth region 158 of first disk portion 120 is positioned adjacent to a first side of rotor 26 and needs to be designed to absorb energy from rotor 26 in the event of a failure of rotor 26. Fifth region 158 of lattice structure 142 is an area of increased density that aids in energy containment during operation of cabin air compressor 10. Energy containment at critical points of compressor outlet housing 20 ensures safe operation of cabin air compressor 10.

Increased energy containment is important to the safe operation of cabin air compressor 10. If rotor 26 fails, compressor outlet housing 20 is designed to absorb the energy to protect and prevent serious damage to other components of cabin air compressor 10. Fifth region 158 of lattice structure 142 is positioned near rotor 26 to contain the energy from rotor 26 in compressor outlet housing 20.

Compressor outlet housing 20 is one example of a housing in which variable lattice structure 142 can be used. In alternate embodiments, variable lattice structure 142 can be used in any suitable housing, for example a compressor inlet housing or a turbine housing, having any design. Further, cabin air compressor 10 is one example of a turbomachinery or rotary machine in which compressor outlet housing 20 or any other housing with variable lattice structure 142 can be used. In alternate embodiments, compressor outlet housing 20 or any other housing with variable lattice structure 142 can be used in an air cycle machine or any other rotary machine.

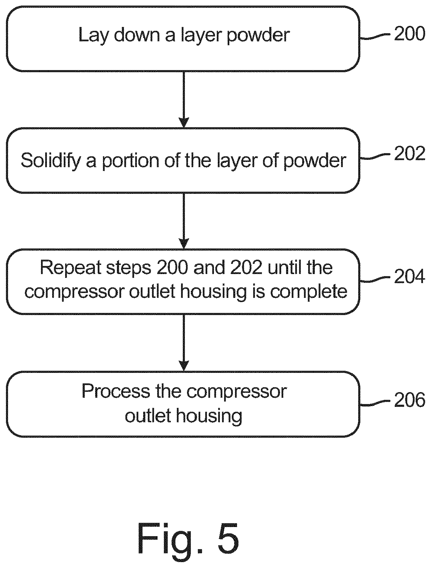

FIG. 5 is a flowchart showing a method of manufacturing compressor outlet housing 20. Step 200 includes laying down a layer of powder. Step 202 solidifying a portion of the layer of powder. Step 204 includes repeating steps 200 and 202 until compressor outlet housing 20 is completed. Step 206 includes processing compressor outlet housing 20.

Compressor outlet housing 20 can be manufactured using an additive manufacturing process. Additive manufacturing involves manufacturing compressor outlet housing 20 layer by layer. Additive manufacturing processes allow complex internal and external shapes and geometries to be manufactured that are not feasible or possible with traditional manufacturing. A typical additive manufacturing process involves using a computer to create a three-dimensional representation of compressor outlet housing 20. The three-dimensional representation will be converted into instructions which divide compressor outlet housing 20 into many individual layers. These instructions are then sent to an additive manufacturing device. This additive manufacturing device will print each layer, in order, and one at a time until all layers have been printed. Any additive manufacturing process can be used, including direct metal laser sintering, electron beam freeform fabrication, electron-beam melting, selective laser melting, selective laser sintering, or other equivalents that are known in the art.

Step 200 includes laying down a layer of powder. The powder can be made of a material selected from the group consisting of stainless steel, corrosion-resistant steel, nickel-chromium alloy, aluminum, synthetic fiber, fiberglass, composites, and combinations thereof. This powder may be laid down by a roller, pressurized gas, or other equivalents that are known in the art. This powder may have any grain size, wherein the grain size of the powder affects the unprocessed surface properties of compressor outlet housing 20.

Step 202 includes solidifying a portion of the layer of powder. A portion of the layer of powder can be solidified by applying energy to layer of powder. Any energy source can be used, including laser beam, electron beams, or other equivalents that are known in the art. The application of this energy will solidify the powder in a specific configuration. The specific configuration of solidified metal will be entirely dependent on which layer the process is currently at. This specific configuration will be in a specific shape and distribution so that when combined with the other layers, it forms compressor outlet housing 20.

Step 204 includes repeating steps 200 and 202 until compressor outlet housing 20 is completed. These two steps together lead to compressor outlet housing 20 being built layer by layer to completion. The specific configuration of step 202 consists of exterior surface 140, which is continuous and solid, and lattice structure 142, which has a varying density. The density of lattice structure 142 can be locally optimized to reduce stress or strain in specific regions and improve energy containment in specific regions. Reducing the stresses at high stress regions can reduce the failure rate of compressor outlet housing 20 and thus the failure rate of cabin air compressor 10. Reduced failure rates result in reduced down time, reduced repairs, and reduced costs. Reduced strain, and thus reduced deflection, at deflection regions means that the parts deform less when in operation. If compressor outlet housing 20 undergoes less deflection, the tolerances between components of cabin air compressor 10 can be reduced. Reducing tolerances between components increases the efficiency of cabin air compressor 10. Improving energy containment in energy containment regions of compressor outlet housing 20 ensures the safe operation of cabin air compressor 10.

Step 206 includes processing compressor outlet housing 20. Step 206 is an optional step. Processing compressor outlet housing 20 can include post processing steps, such as smoothing of exterior surface 140 of compressor outlet housing 20 or removal of powder from an interior of compressor outlet housing 20. Since an additive manufacturing process is used, exterior surface 140 of compressor outlet housing 20 may be rougher than desired. Through sanding, brushing, buffing, grinding, and combinations thereof, exterior surface 140 of compressor outlet housing 20 may be made smoother. Removal of the powder from an interior of compressor outlet housing 20 can involve the process of removing the unsolidified powder between lattice structure 142 through high pressure gas, mechanical movements, or other methods know in the art.

### Discussion of Possible Embodiments

The following are non-exclusive descriptions of possible embodiments of the present invention.

A housing for a rotary machine includes a support sleeve extending along a central axis of the rotary machine, a volute portion defining a duct in the housing, and a variable lattice structure in an interior of the housing. The variable lattice structure includes a first region of the housing having a first lattice structure and a second region of the housing having a second lattice structure. The second lattice structure of the second region is denser than the first lattice structure of the first region. The second region is a deflection region, a stress region, or an energy containment region of the housing.

The housing of the preceding paragraph can optionally include, additionally and/or alternatively, any one or more of the following features, configurations and/or additional components:
The housing has a continuous exterior solid surface surrounding the variable lattice structure.

The stress region of the housing is a region of the housing that is subject to higher stress than other regions of the housing.

The stress region of the housing is a region of the volute portion that curves outwards towards a first side of the housing.

The deflection region of the housing is a region of the housing that is subject to deflections.

The deflection region of the housing is a flange of the housing.

The energy containment region of the housing is a region of the housing that is configured to contain energy.

The housing further includes a first disk portion extending radially outward from the support sleeve.

The energy containment region of the housing is a region of the first disk portion of the housing.

The housing further includes a first disk portion extending radially outward from the support sleeve, and a second disk portion extending radially outward from the first disk portion, wherein the volute portion extends radially outward from the second disk portion.

The housing is made of a material selected from the group consisting of stainless steel, corrosion-resistant steel, nickel-chromium alloy, aluminum, synthetic fiber, fiberglass, composites, and combinations thereof.

A rotary machine includes a tie rod extending through the rotary machine, a rotor mounted on the tie rod, and a first housing partially surrounding the tie rod and the rotor. The first housing includes a support sleeve extending along a central axis of the rotary machine, a volute portion defining a duct in the first housing, and a variable lattice structure in an interior of the first housing. The variable lattice structure includes a first region of the first housing having a first lattice structure and a second region of the first housing having a second lattice structure. The second lattice structure of the second region is denser than the first lattice structure of the first region. The second region is a deflection region, a stress region, or an energy containment region of the first housing.

The rotary machine of the preceding paragraph can optionally include, additionally and/or alternatively, any one or more of the following features, configurations and/or additional components:
The stress region of the first housing is a region of the first housing that is subject to higher stress than other regions of the first housing.

The stress region of the first housing is a region of the volute portion that curves outwards towards a first side of the first housing.

The deflection region of the first housing is a region of the first housing that is subject to deflections.

The deflection region of the first housing is a flange of the first housing that abuts a second housing.

The energy containment region of the first housing is a region of the first housing that is configured to contain energy.

The housing further includes a first disk portion extending radially outward from the support sleeve.

The energy containment region of the first housing is a region of the first disk portion of the first housing positioned adjacent to the rotor.

The housing further includes a first disk portion extending radially outward from the support sleeve, and a second disk portion extending radially outward from the first disk portion, wherein the volute portion extends radially outward from the second disk portion.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A housing (20) for a rotary machine comprising:
a support sleeve (118) extending along a central axis of the rotary machine;
a volute portion (124) defining a duct (34) in the housing; and
a variable lattice structure (142) in an interior of the housing, the variable lattice structure comprises:
a first region (150) of the housing having a first lattice structure; and
a second region (152) of the housing having a second lattice structure;
wherein the second lattice structure of the second region is denser than the first lattice structure of the first region; and
wherein the second region is a deflection region, a stress region, or an energy containment region of the housing.

2. The housing of claim 1, wherein the housing (20) has a continuous exterior solid surface (140) surrounding the variable lattice structure.

3. The housing of claim 1 or 2, wherein the stress region of the housing (20) is a region of the housing that is subject to higher stress than other regions of the housing.

4. The housing of claim 3, wherein the stress region of the housing (20) is a region of the volute portion (124) that curves outwards towards a first side (110) of the housing.

5. The housing of claim 1 or 2, wherein the deflection region of the housing is a region of the housing that is subject to deflections.

6. The housing of claim 5, wherein the deflection region of the housing (20) is a flange of the housing.

7. The housing of claim 1 or 2, wherein the energy containment region of the housing (20) is a region of the housing that is configured to contain energy.

8. The housing of claim 7, and further comprising:
a first disk portion (120) extending radially outward from the support sleeve (118).

9. The housing of claim 8, wherein the energy containment region of the housing (20) is a region of the first disk portion (120) of the housing.

10. The housing of any of claims 1 to 7, and further comprising:
a first disk portion (120) extending radially outward from the support sleeve (118); and
a second disk portion (122) extending radially outward from the first disk portion (120);
wherein the volute portion (124) extends radially outward from the second disk portion (122).

11. The housing of any preceding claim, wherein the housing (20) is made of a material selected from the group consisting of stainless steel, corrosion-resistant steel, nickel-chromium alloy, aluminum, synthetic fiber, fiberglass, composites, and combinations thereof.

12. A rotary machine comprising:
a tie rod (16) extending through the rotary machine;
a rotor (26) mounted on the tie rod; and
a first housing partially surrounding the tie rod and the rotor, the first housing being a housing as defined in any preceding claim.

13. The rotary machine of claim 12, wherein the deflection region of the first housing is a region of the first housing that is subject to deflections; and optionally wherein the deflection region of the first housing is a flange of the first housing that abuts a second housing.

14. The rotary machine of claim 12 or 13, wherein the energy containment region of the first housing is a region of the first housing that is configured to contain energy, optionally
a first disk portion extending radially outward from the support sleeve; and further optionally wherein the energy containment region of the first housing is a region of the first disk portion of the first housing positioned adjacent to the rotor.
